# EUROPEAN PATENT SPECIFICATION

(11) **EP 0 719 227 B1**
(45) Date of publication and mention of the grant of the patent: **13.01.1999**
(21) Application number: 93920635.5
(22) Date of filing: 05.10.1993
(51) Int. Cl.: B65B 7/16, B29C 65/14

(54) **METHOD AND APPARATUS FOR SEALING OPEN-TOPPED CONTAINERS**
VERFAHREN UND VORRICHTUNG ZUM VERSCHLIESSEN VON OBEN OFFENEN BEHÄLTERN
PROCEDE ET APPAREIL DE FERMETURE DE RECIPIENTS BEANTS

(43) Date of publication of application: 03.07.1996
(73) Proprietor: Bakker, William J., Orangeville, Ontario L9W 2Y8 (CA); Williams, Noel A., Don Mills, Ontario M3B 1K8 (CA)
(72) Inventor: Bakker, William J., Orangeville, Ontario L9W 2Y8 (CA); Williams, Noel A., Don Mills, Ontario M3B 1K8 (CA)
(74) Representative: Gee, Steven William
(86) International application number: PCT/CA93/00399
(87) International publication number: WO 95/09766

(56) References cited:
- EP-A- 0 437 847
- AU-A- 2 733 767
- DE-A- 1 779 656
- FR-A- 1 543 503
- GB-A- 2 022 501
- US-A- 3 507 093
- US-A- 5 249 410

## Description

### TECHNICAL FIELD

This invention relates to the sealing of open-topped containers using heat-shrinkable plastic film. In particular, the invention relates to a method of sealing such containers, and to apparatus for implementing the method. A particular application is to seal food or beverages inside the containers, although the applications are not limited to food and beverages.

### BACKGROUND ART

Presently in the fast food drink industry it is typical to serve a drink in a paper, plastic or other disposable cup topped with a preformed plastic lid. The plastic lid fits tightly over the lip formed at the top of, for example, a paper drink cup, and may include apertures to permit straws or openings to be formed in the lid to directly drink the contents of the cup.

Unfortunately, there are many problems associated with the use of these plastic lids. For example, the lids are generally expensive. Further, the lids are bulky and create problems in storage and in disposal. Further, the seal formed by the lids is dependant upon the lid being placed on properly, and can leak if not properly placed. Finally, the handling of the lid is not completely hygienic.

In order to overcome these problems, various devices and methods have been proposed in which a cover such as a plastic film is placed on an open-topped container and then heated to shrink it into sealing engagement with the top of such a container. Examples of such devices can be found in the following United States patents: U.S. Patent Nos. 3,260,775; 3,354,604; 3,460,317; 3,491,510; 3,494,098; 3,507,093; 3,621,637; 3,877,200; 3,838,550; 3,916,602; 4,035,987; 4,184,310 and 4,562,688. While the solutions proposed by these prior devices and methods are interesting, they fail to provide a sufficiently cost efficient, easy and inexpensive alternative to preformed rigid plastic lids. As a Consequence, rigid plastic lids remain in widespread use. Some of the main failings of these prior devises are that they are bulky, noisy, unresponsive, and expensive. Heating systems comprising blowing air over a hot element and then onto a film require large amounts of unnecessary heat, even when in standby mode, which makes temperature control very difficult. Further, continuous elevated temperatures are expensive to maintain and may be deleterious to the immediate environment.

Other references of interest include Australian patent application no. 27337/67, United Kingdom patent application no. GB 2022501, German Auslegeschrift 1779656, European patent publication no, 0 437 847 A1, and United States patent no. 3,507,093.

The Australian application shows a heat-shrinkable plastic film used to seal an open-topped container, preferably using fluid heat such as hot air or steam, but possibly using infrared radiation, However, there is no treatment of the film or container to selectively absorb radiation, and instead a shield is used to protect portions of the film where shrinkage is not desired.

The United Kingdom application is directed to a method and apparatus for sealing centrifuge tubes, by positioning a heat-conductive cap member over an open end of the neck of the tube, and using the cap member to apply heat and pressure to cause the neck to melt and fold into a closure. It is taught that the cap, which is part of the apparatus, can be blackened to absorb infrared radiation. There is no teaching of selectively blackening portions of the film or container to selectively absorb radiation.

The German Auslegeschrift shows the use of a radiation-absorbing body disposed between a sealing area and a radiation source.

The European Patent publication shows radiation heating in combination with darkened spots, but no shrinking is effected as in the present invention.

The United States patent shows upward movement of a container to effect cutting of a film.

### DISCLOSURE OF INVENTION

Aside from the benefits of increased hygiene and reduced waste, the invention is directed to providing a practical device which has commercial utility. One aspect of the invention is to provide an energy efficient way of sealing open-topped containers which avoids any substantial build-up of heat and the resulting waste of energy. An intermittent source of radiant energy is used, and the radiant energy is directed to the specific place where heat is required. Thus, heat is originated only where it is needed, when it is needed. A cool, quiet, safe and efficient device results.

In the invention, the open-topped container is sealed with a heat-shrinkable plastic film in accordance with the method of claim 1. In addition to the film being darkened in the sealing area, an energy-absorbing body may be interposed between the radiation source and the sealing area, close to the sealing area.

The apparatus of the invention as defined in claim 4 includes a housing adapted to receive the container, means for positioning a piece of the film across the open top, the piece of film being sufficiently large to overlap onto a sealing area around the upper margin of the container, and means for radiating the sealing area with radiation having a substantial infrared component, so as to shrink the film onto the sealing area.

In the preferred embodiment of the invention, a first radiant energy source is provided to direct energy towards the sealing area, and a second radiant energy source is provided to direct energy down onto the top of the container once sealed, to tauten the film across the top.

Further features of the invention will be described or will become apparent during the course of the detailed description which follows.

### BRIEF DESCRIPTION OF DRAWINGS

Figure 1 is a perspective view of a device according to the invention in use;
Figure 2 is a front sectional view of an open-topped container according to the invention with a heat shrunk cover in place;
Figure 2a is a top view of the container of Figure 2.
Figure 3 is a front view of the container of Figure 2 having a darkened upper band;
Figure 4 is a top view of the device of Figure 1, with the top wall broken away to show the contents;
Figure 5 is a sectional view taken along lines 5-5 of Figure 4;
Figure 6 is a view similar to Figure 5 with the container in a raised position;
Figure 7 is a view of a part of the device of Figure 1; and
Figure 8 is a view along lines 8-8 of Figure 7;
Figure 9 is an alternative configuration for a knife element shown in Figure 5;
Figure 10 is a view along lines 10-10 of Figure 9;
Figure 11 is a schematic sketch of an electronic control circuit for the invention;
Figure 12 is an alternative embodiment of a microswitch system according to the invention;
Figure 13a is a view along lines 13-13 of Figure 12 in a first position; and
Figure 13b is a view along lines 13-13 of Figure 12 in a second position.

### BEST MODE FOR CARRYING OUT THE INVENTION

As outlined above, the invention permits an open-topped container to be sealed with a heat-shrinkable plastic film. By any suitable means, a piece of the plastic film is positioned across the open top of the container, overhanging the edges. The area around the upper margin of the container is then radiated, the radiation having a substantial infrared component. The film is adapted to absorb a substantial portion of the energy, at least in the area where the seal is to be effected. This causes the plastic film to shrink around the upper portion of the container, thus effecting a seal.

The thin film can be adapted to absorb energy by being made from a tinted material, or by being coated with an energy absorbent coating, e.g. by printing. The ability of the opaque or coated film to absorb radiant energy will vary depending upon what type of tinting or coating is used. A darker or more opaque film will absorb more energy.

The container may equally be adapted to absorb radiant energy, and thus produce heat in a preferred location, by including a darkened bank 15 in the area where heat generation is desired, such as just below the rim. For aesthetic reasons, black bands may not be acceptable, but other coloured bands will also work. With a cooler colour, the exposure to the radiant energy source may need to be slightly longer. However, the length of time of exposure to the radiant energy source can be adjusted in the invention through adjustments to the timer T2. A gap 17 may be incorporated into the band 15 to permit the end user to lift the shrunken cover off the container if so desired. Locating heat generation means on the container is especially useful in instances where a mostly transparent film is desired.

Both the film and the container may be coloured, if desired, so that each absorbs a portion of the energy. In the event that the container is sensitive to heat, such as may be the case with a wax-coated or plastic container, it may be desirable to have only the film adapted to absorb radiant energy.

In addition, an absorbent body can be interposed between the sealing area and the radiation source, closely adjacent to the film. An example of a preferred interposed absorbent body is a darkened aluminum screen 112, which moves closely adjacent the edge 103. The darkened portion of the screen will absorb energy and then transmit it as heat.

The film 26 is preferably a biaxially oriented shrink film having a preferred thickness of between 40 and 120 gauge. Good results have been achieved with a 75 gauge polyvinyl chloride film purchased from Reynolds Metals Company at Richmond, Virginia. Other films, such as copolymers, polyolefins and the like may also be appropriate. The film, to be most useful, must be food-grade contact-approved by the appropriate regulatory authorities (except of course in applications which do not involve food or beverages). A 7½ inch (19 cm) outer diameter roll of 75 gauge shrink film, which includes a 3-inch (7.6 cm) diameter fibre core, will yield approximately 8,000 covers according to the invention. The film is capable of shrinking about 40% biaxially, although only about 15% shrinkage is typically required in the invention. The film should be relatively easy to puncture, e.g. with a straw, but should resist tear propagation.

In any of the above alternatives, radiant energy is used, rather than natural or forced convection or other means. Radiant energy travels relatively unimpeded through transparent mediums such as air or transparent film. It turns to heat useful for shrink applications only when it is absorbed. A theoretical body capable of absorbing all radiant energy striking it is known as an "ideal black body". By conforming more or less to the ideal black body, the rate, amount and location of heat generation can be controlled.

Another advantage of using radiant energy is that it can be turned on and off virtually instantaneously, and can be focused and directed to the location it is desired, at the speed of light, without excessive stray heat energy being produced. The energy source does not have to be on continuously, or on standby in readiness for a container, which is the case with hot air systems. The cooling needs of the apparatus are therefore minimal, necessitating only a very small fan, or possibly even no fan at all.

In the preferred embodiment of the invention, a first radiant energy source directs energy towards the sealing area, and a second radiant energy source is provided to direct energy down onto the top of the container once sealed, to tauten the film across the top.

The apparatus of the invention includes a housing adapted to receive the container, means for positioning a piece of the film across the open top, sufficiently large to overlap onto a sealing area around the upper margin of the container, and means for radiating the sealing area with radiation having a substantial infrared component, so as to shrink the film onto the sealing area.

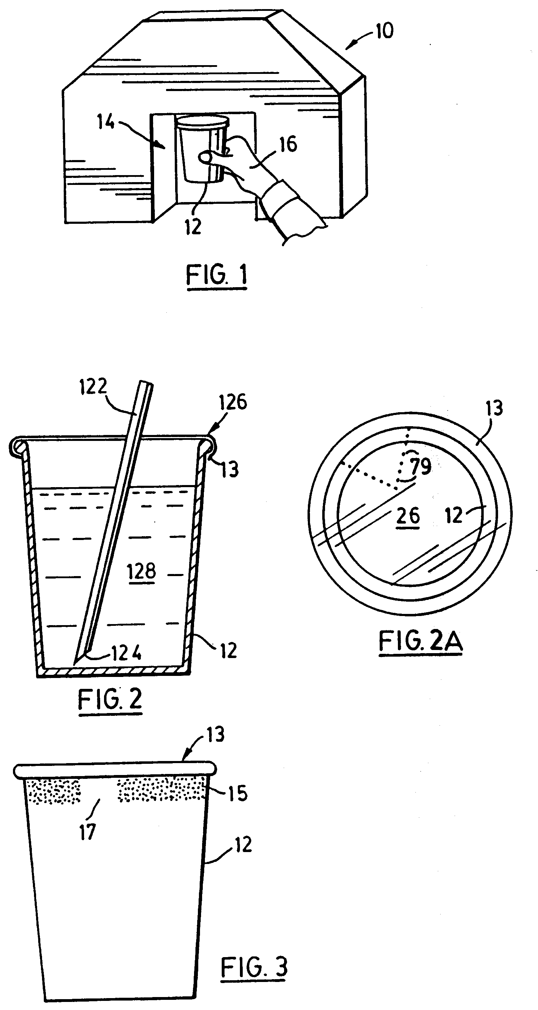

Figure 1 shows the apparatus 10, for use in sealing an open-topped container 12, such as a cup for soft drinks. The housing 10 includes an opening 14 of sufficient size to allow placement of the container 12 within the housing 10. In the embodiment of Figure 1, placement of the container 12 within the opening 14 is accomplished manually, illustrated by a hand 16.

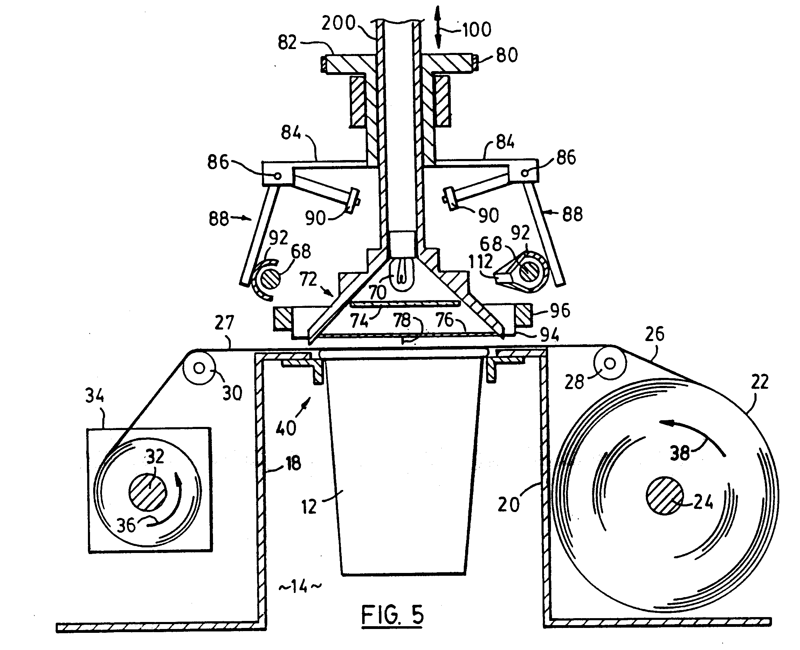

Turning to Figure 5, there is shown a cross-sectional schematic view of the operational components of the device 10 of Figure 1. The container 12 is shown in the opening 14. The opening 14 is defined by side walls 18 and 20 of the device 10. Shown on the right-hand side is a roll of thin plastic film 22 on an axle 24. The film 26 passes over a roller 28 across the top of the container 12 across a second roller 30 and onto a take-up axle 32. A rewind motor 34 can rotate the pickup axle 32 in the direction of arrow 36 to advance the film 26 across the top of the container 12 and cause the roll of film 22 to rotate in the direction of arrow 38. Alternatively, the advancing of the film 26 could be accomplished manually by turning a lever or knob mounted on take-up axle 32.

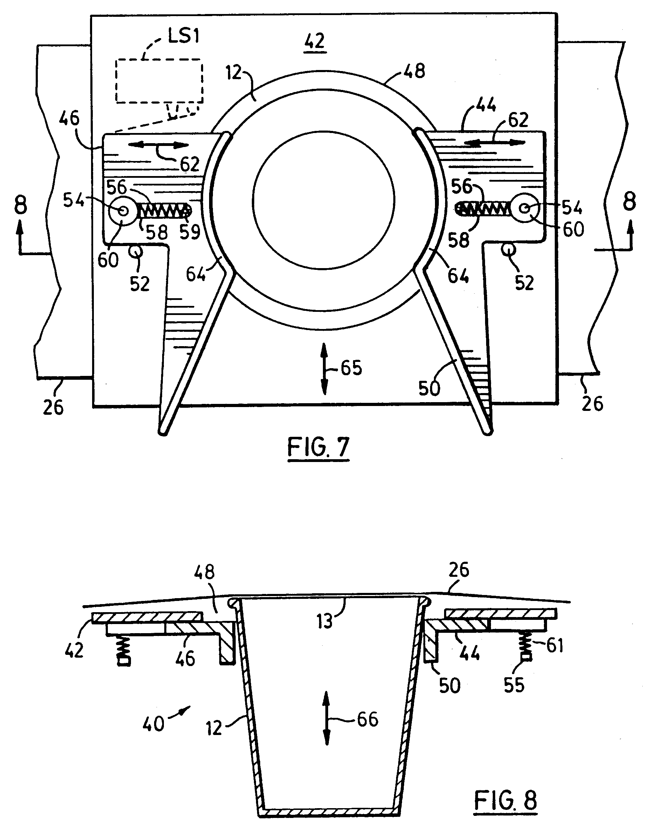

In Figure 5, the container 12 is positioned by a locator identified generally at 40. The locator 40 is shown in more detail in Figures 7 and 8. Turning to Figure 7, there is shown a plate 42 having a pair of opposed guides 44 and 46. The plate 42 also has an opening 48 located between the guides 44, 46. The guides 44 and 46 are substantially mirror images of each other, and therefore the following discussion in respect of the guide 44 applies equally to guide 46.

The guide 44 comprises a rub rail 50 which contacts an outer edge of a container 12. Extending from the plate 42 are two posts in respect of each guide 44, 46. In respect of the guide 44 there is a stop post 52 and a guide post 54. A slot 56 is formed in the guide 44 and a spring 58 is housed between the guide post 54 and the end of the slot 56. A pin 59 may be used to secure one end of the spring 58. A washer 60 is used to retain the other end of the spring 58 within the slot 56. The washer 60 is placed around the guide post 54. Between the free end 55 of guide post 54 and the washer 60 is a further spring 61. The spring 61 allows the guide plate 44 to articulate away from the plate 42 to facilitate removal of the container 12 from the device 10.

As can be seen in the drawings, the guide 44 can move laterally in the direction of double-ended arrow 62, guided by means of the stop 52 and the guide post 54 with the slot 56. The curved portion 64 of the rub rail 50 provides a tactile indication to anyone inserting a container 12 into the locator that the container is appropriately located, i.e. centred under the plate opening 48.

Turning to Figure 8, the locator 40 of Figure 7 is shown in cross-sectional view. As can be seen, the guides 44 and 46 are positioned on adjacent side edges of a container 12. The plate opening 48 is shown together with the plate 42. The thin film 26 is also shown stretched across the top 13 of the container 12.

It can be seen from the drawings that the container 12 can be moved in the direction of double ended arrow 65 into position beneath plate opening 48. During this period, the guides 44 and 46 will gradually open and then close about the periphery of the container 12. Thereafter, as shown in Figure 8, the container 12 is free to be moved in the direction of double ended arrows 66 as will be discussed below. Containers 12 of various diameters can thus be accommodated, since all containers will be centred by the locator beneath the plate opening 48. This is desirable in a food services environment where cup size selections may vary, typically including at least small, medium and large.

It should of course be understood that although some container positioning means is required, the specific positioning means described here is certainly not essential. Any suitable means could be employed. Alternatively, although certainly not ideal, full reliance could be placed on correct manual positioning of the container, with no specific positioning means for the container.

Turning now to Figure 5, a container 12 is shown centred in locator 40. A first radiant energy source 68 and a second radiant heater 70 can now be explained. Located above the centred and located container 12 is a top shrink hood 72. The second radiant heater 70 is located within the top shrink hood 72. The top shrink hood 72 includes a shield 74 of glass or other approved transparent material which does not absorb IR radiation, and a heat transfer means 76. In some circumstances the shield 74 may not be required. However, to prevent the possibility of splashes reaching the second radiant energy source 70, it is preferred. Good results have been achieved when the heat transfer means 76 is made from a screen aluminum material painted a dark colour, such as black. The dark aluminum heats and cools quickly which is desirable in the circumstances.

A preferred type of energy absorbing body 76 is a darkened aluminum screen. The body 76 is placed very closely adjacent the top portion of the cut section 102 and may be in contact therewith. The darkened screen or body 76 absorbs some of the energy, creating heat and transferring it onto the top portion. Energy not blocked by the screen will pass through and is available to be absorbed by the film, since the film is capable of doing so. Screen 76 is especially useful where the film used in mostly transparent and cannot absorb sufficient radiation to effect shrinkage. Aluminum is a suitable material because it will cool rapidly, when the energy source 70 is shut off, thereby preventing premature shrinkage of a top portion on a subsequent container upon being first introduced into the hood 20.

A pierce tool 78 is also shown extending outwardly from the heat transfer means 76. The purpose of the pierce tool 78 is to make a vent opening in the thin film to allow gases such as carbon dioxide from a soft drink to escape the container, if such venting is required or desired.

An alternative to pierce tool 78 is to form small opaque portions 79 in the shrink film which are relatively more opaque than the surrounding film. These opaque portions or "dots", being more absorbent than the surrounding film, will cause a hot point which may perforate the film as more fully explained below. If desired the hot points can be made in a specified pattern to form a sipping opening or the like, as shown in Figure 2A. Also shown in Figure 2 is a straw 122 with a pointed end 124 which can assist in piercing the film, shown in place as 126. A fluid, such as a soft drink is shown at 128. The plastic film should be of a type in which a tear does not readily propagate.

Also shown in Figure 5 is a knife or film cutting blade 94 to which is attached a heating element 96. The heated blade 94 ensures a quick clean cut of the thin film, upon the thin film contacting the blade 94. As can be seen from Figure 5, the blade 94 is below the top hood 72, so the film will be cut to shape just prior to or about the same time as the container 12 contacts the hood 72. Good results have been achieved when the blade is made from a two point centre face steel cutting rule, and maintained at a temperature of between 135°C (275°F) to 204°C (400°F). This format appears to limit smoke and fume generation.

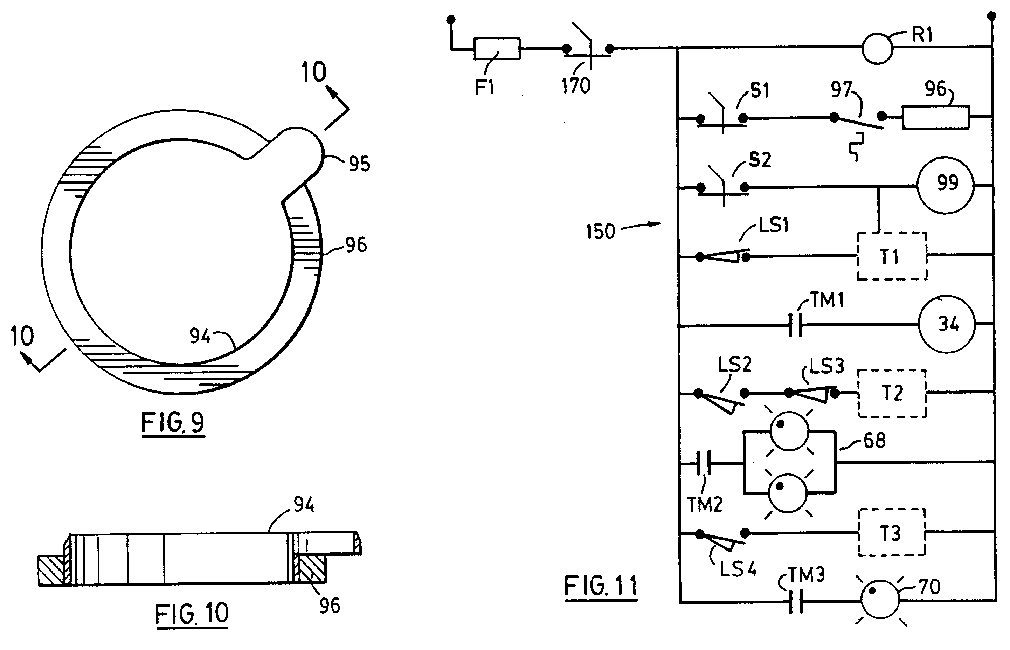

The knife 94 may be circular in shape, or may be as shown in Figures 9 and 10. It will be noted that the knife 94 in Figures 9 and 10 includes a rounded oblong section 95. This will result in a similarly shaped section being formed in a cut piece of film, as described below, which can be used as a convenient pull tab for removing a cover which has been shrunk onto a container 12. The thin film 26 has a width greater than the width of the knife 94 so that a trim 27 (see Figure 5) is left after the cut is made, and the trim 27 is strong enough to allow the film 26 to be advanced by a tensile force without tearing.

It should be clearly understood that any suitable cutting means can be used to produce the cut piece 102. The invention is not limited to the specific cutting means described here. For example, even better results may be achieved using a blunt heated cast iron blade, a hot wire, or some other conventional film cutting means.

As an alternative to the film being pushed up against the blade, a solenoid may be triggered by insertion of the cup, to push the knife down against a surface. The surface may be covered with thin silicone rubber sheeting or the like, if desired.

In some circumstances, it may be desirable to urge the film onto the cup. Therefore, the invention also comprehends the use of a spring wire 110, which trails (or leads) the revolving first radiant heat means 68, and urges the edge 103 into contact with the container 12 just below the top 13.

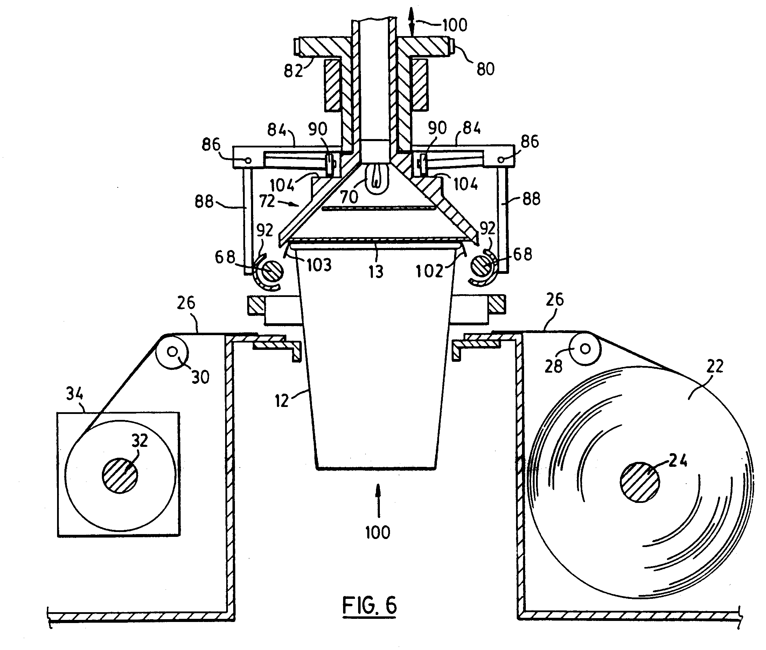

Turning now to Figure 6, the operation of the apparatus will be explained. In Figure 6 the container 12 has been raised in the direction of arrow 100. This has had the effect of pushing the film 26 upwardly into engagement with the heated film cutter blade 94. This has caused a cut portion of the film shown as 102, which could be about 15 cm in diameter for example, to be draped across the top 13 of the container 12, which could be about 12 cm in diameter for example. The dimensions of the cut portion and of the container obviously may vary, as long as there is a sufficient overlap.

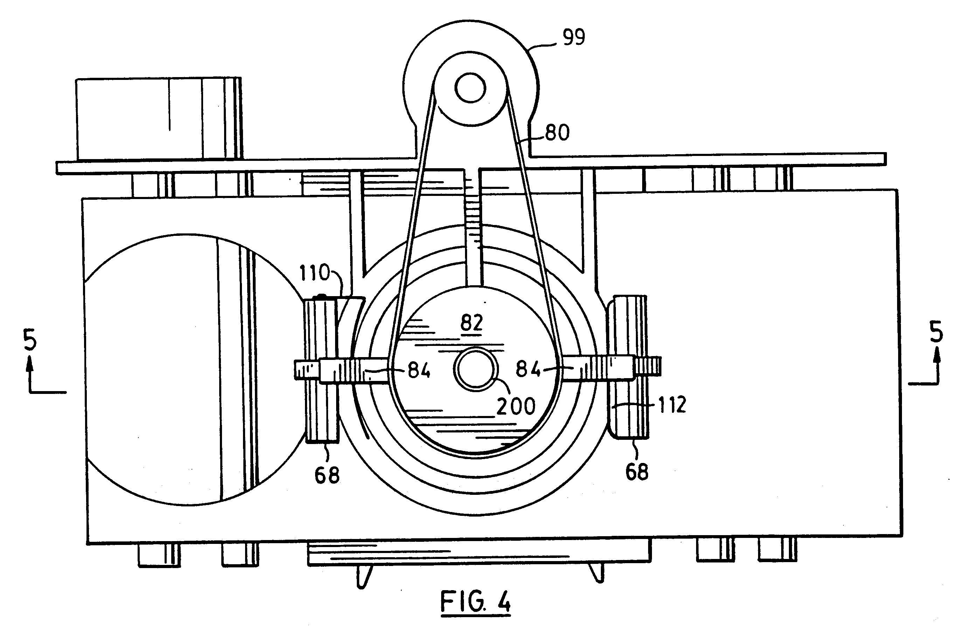

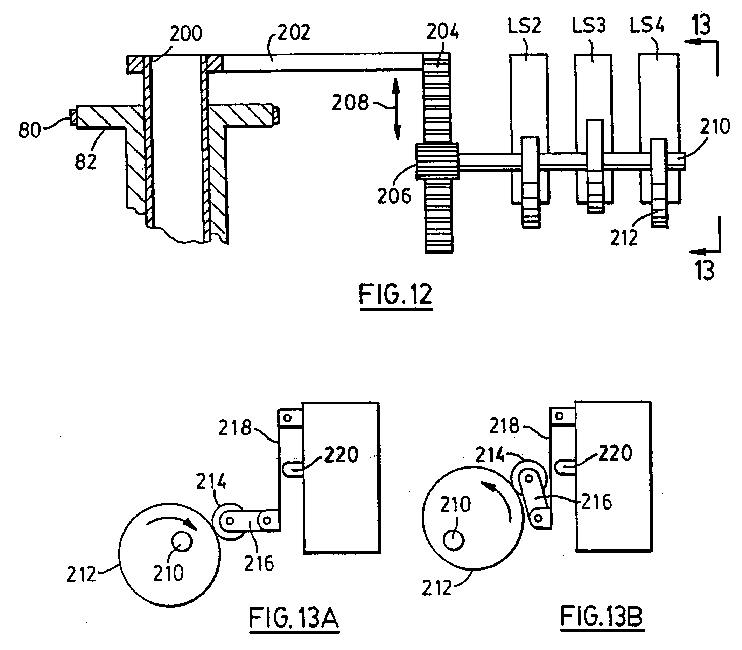

At this point the hood 72 is holding the cut piece of film 102 generally in place. Raising the container 12 further also raises the hood 72. Rollers 90 then contact a ledge 104 formed on the outer surface of the hood 72. Further upward movement causes the movement of the first radiant energy source 68 about the pivot point 86 until the first radiant energy source 68 is closely adjacent to a draped over edge of cut portion 102 shown as 103. Contact is then made at a limit switch, as explained below in respect of Figure 11, which energizes a motor 99 (shown in Figure 4). Upon energization of the motor 99, the belt 80 revolves, causing the rotating arms 84 to revolve, rotating the first radiant energy source 68 about the periphery of the top of the container 13. Simultaneously with the energization of the motor 99 and the rotation of the first radiant energy source 68, the first radiant energy source 68 is energized to cause radiant energy to be directed towards the dangling edge 103 of the cut portion 102 of the film 26.

It has been found that the preferred radiant energy sources are Tungsten Halogen Lamps. About 70% of the energy produced by these lamps is in the preferred wavelength range of the infrared (750 millimicrons and beyond).

These lamps are compact, durable, inexpensive and readily available. Lamps in the range of 200 to 300 watts are suitable. Other energy sources which produce sufficient infrared radiant energy may also be used, the choice of such sources being within the ordinary skills of those working in this technical field.

Positioning the first radiant energy source 68 closely adjacent to the downward edge 103 of the cut portion 102 is preferred because radiant energy obeys the inverse squared rule in which the amount of energy is proportional to the inverse of the square of the distance from the source. By locating the first radiant energy source 68 close prior to being energized, more energy can be usefully used and focused away, for example, from an operator's hands. Also, by the pivoting action, the operator's hands are kept clear of the energy source 68, until the container 12 is in position.

Turning now to Figure 4, the belt 80, pulley 82 and drive motor 99 are all shown. Also shown are two rotating arms 84 and two first radiant heaters 68. Obviously, fewer or more radiant heating elements could be used according to space requirements and preference. However, when the drive motor operates at 100 rpm, two radiant heat means 68 provides good results. By varying the size of the pulley 82, the speed of revolution of the first radiant energy source 68 can also be varied. Good results have been achieved when the pulley 82 is configured to cause the first radiant energy source 68 to rotate at 100 rpm.

Also shown in Figure 5 is a drive belt 80 which connects a pulley 82 with a motor. Attached to the pulley 82 are a pair of arms 84. The arms 84 rotate when the pulley 82 is rotated by the belt 80. Depending from the arms 84 about pivot points 86 are pivot arms 88. Pivot arms 88 include a roller 90 at one end and the first radiant energy source 68 at the other end. Preferably, a reflector is provided such as the reflector 92 shown outside the first radiant energy source 68, to focus the radiant energy on the sealing area

After a predetermined length of time (typically about one second or less in prototypes of the invention), the first radiant energy source 68 is de-energized and the second radiant energy source 70 is energized by a timer 120. The second radiant energy source 70 energy is directed through the glass shield 74 onto an energy absorbing body 76. This transfer of heat causes a shrinking of the top portion across container 12 of the cut portion 102. Thereafter, the sealed container 12 can be lowered and removed from the apparatus. Preferably a buzzer signals the operator as to when the container may be removed. Attempting to remove the container prematurely may result in a defective seal, or in a cover which is not taut, but otherwise is not harmful, i.e. no damage to the apparatus can be caused.

The second radiation stage is not essential to effecting the seal, but produces a more aesthetically pleasing seal, and is therefore preferred. Also, if the seal is intended to be punctured by a straw, then this stage facilitates that by ensuring that the plastic is stretched taut across the opening of the container.

Turning to Figure 11, a schematic of an electrical system 150 for the invention is disclosed, which sets out in more detail the interaction between the container 12 and hood 72 location, and the activation of the various components described above.

One of the characteristics of the electrical design is that it must allow for the varying rates that the container 12, which is moved by a human hand, enters and leaves the device 10. It must not be essential that the container be moved at a certain rate.

Another characteristic of the electrical design is that it must be capable of being adjustable to variations of film shrinkage caused by alterations of the energy absorbency or opaqueness of the film. It is anticipated that users of the device will require their own particular colours, printed messages or transparent area on their container covers.

In the preferred embodiment the raising and lowering of hood 72 and the motion of locator 40 will trigger micro-switches which engage timers as described below. Certain events must take place as hood 72 is raised and other events must take place when hood 72 is lowered.

Referring to the wiring system 150, F1 is a fuse. When the main switch 170 is turned on, a pilot light R1 lights up. Then, switches S1 and S2 are manually turned on. As shown, S1 turns on resistance heater 96 when thermostatic switch 97 is closed, which heats the knife 94. A thermostatic control is shown at 97. When S2 is turned on, it activates motor 99 and also signals timer T1. Also shown is a relay TM-1. The timer T1 engages motor 34 and advances the film 26 for a single "space", which is determined by the time set on timer T1. Thus when the machine is activated and ready to operate by turning on switch S2, a fresh piece of film 26 is automatically presented. Switch LS1 is situated on plate 42, (shown in ghost outline in Figure 7) so that when guide 46 rotates outwardly on withdrawal of the container, LS1 also signals timer T1 which engages motor 34 and advances the film in a like manner.

Also shown are switches LS2 and LS3 which close when hood 72 moves upward. These switches activate a second timer T2 which activates relay TM-2 which in turn activates first radiant energy source 68. On the downward motion switch LS3 opens and thereby prevents timer T2 from activating source 68 again.

On the downward motion of hood 72, switch LS4 closes, which activates timer T3 which through a relay TM-3 activates radiant energy source 70 for a predetermined time.

Figure 12 shows in schematic form the microswitch interconnections. On the left hand side of Figure 12 are the belt 80 around the pulley 82. A shaft 200 extends upwardly from the top hood 72. A connecting rod 202 is attached to shaft 200, and will rise and subside with the hood 72 being raised and lowered. Remote from shaft 200 there is a rack 204 connected to the rod 202 which interacts with a pinion 206, in a manner shown by double ended arrows 208. Also shown are a cam shaft 210 attached to eccentric cams 212.

Shown in Figures 13A and 13B are the means of closing electrical circuits upon rotation of the cam shaft 210 by the pinion 206. A secondary roller 214 is located on a pivot arm 216. When cam 212 is rotated in one direction an electrical spring clip 218 is forced into contact with an electrical contact 220 closing a circuit. Upon being rotated in an opposite direction, the cam 212 urges the pivot arm 216 up and out of the way, and does not close the circuit, as shown in Figure 13B.

It will be appreciated by those skilled in the art that the foregoing description relates to a preferred embodiment and that various modifications can be made without departing from the scope of the appended claims. Some of these modifications have been discussed above and others will be apparent to those skilled in the art.

For example, the spinning first radiant energy source 68 could be replaced with a row or ring of fixed position bulbs. However, the process would be slightly more difficult to control, since the total energy output would likely be greater, and more energy expensive. Thus, the moving first energy source 68 is preferred.

Another alternative to a spinning first radiant energy source would be to use a custom bulb in the shape of a ring which surrounds the container.

### INDUSTRIAL APPLICABILITY

The invention provides an improved method of sealing open-topped containers using heat-shrinkable plastic film, and apparatus for implementing the method.

## Claims

1. A method for shrinking a piece of heat-shrinkable plastic film (102) onto an open-topped container (12) across the top thereof and against a sealing area (15) adjacent the upper margin of said container on the outside thereof to effect a seal, comprising the steps of first positioning said piece of plastic film across said open top and extending downwardly therefrom, and then shrinking said piece against said container at said sealing area by irradiating said sealing area with radiation having a substantial infrared component, characterized in that the area of said piece of plastic film adjacent said sealing area is darkened so as to be substantially more absorptive of infrared energy than the area of the piece which extends across the top of the container, so that said film adjacent said sealing area shrinks onto said sealing area before any substantial shrinkage of the film which extends across the top of the container.

2. A method as recited in claim 1, wherein said positioning of said piece of plastic film across said open top and extending downwardly therefrom is effected by raising said container upwardly against a sheet of said film to push said film upwardly against cutting means (94) to thereby cut said piece from said sheet, and wherein further raising of said container brings said sealing area into position for irradiation by radiation means (68).

3. A method as recited in claim 1, characterized by the further step of radiating the portion of said film extending across said open top of said container, after said shrinking step, in order to then shrink said portion extending across the open top sufficiently to render the film taut.

4. Apparatus for sealing an open-topped container (12) by shrinking a piece (102) of heat-shrinkable plastic film (26) onto a sealing area (15) around the upper margin of said container, comprising:
a roll (22) of said heat-shrinkable plastic film;
a housing (10) containing means (24, 28, 30, 32) for positioning a strip of said film from said roll across the top of a container insertion opening (14);
means (94) for cutting said film such that said film when cut is sufficiently large to overlap onto said sealing area, said means for cutting being operable by said container being pushed upwardly against said film prior to being pushed further upwardly for radiation of said sealing area; and
means (68) substantially above the level of said strip of film for radiating said sealing area with radiation having a substantial infrared component, so as to shrink said film onto said sealing area, when said container is pushed upwardly from the level of said film to position said sealing area opposite said means for radiating;
characterized by said plastic film (26) having darkened areas thereon so as to be substantially more absorptive of infrared energy than other areas thereof, generally alignable with said sealing area, and further characterized by said film strip positioning means including being adapted to align said darkened areas above said sealing area.

5. Apparatus as recited in claim 4, further characterized by said film strip positioning means including indexing means (34) for advancing said film after a container has been sealed, and sensing means for sensing indicia on said film to ensure proper positioning of said darkened areas relative to said container.

6. Apparatus as recited in claim 4, further characterized by a second radiation source (70) arranged to radiate the portion of said film extending across said container, so that after sealing, said film may be caused to shrink so as to become taut.

7. Heat-shrinkable film in a roll, for use in apparatus for sealing open-topped containers with said film by radiating same with radiant energy to effect heat shrinking, said film being imprinted to produce areas which are more energy-absorbent than other areas of said film, there being a large number of said areas arranged sequentially on said roll in an evenly-spaced fashion, each said area being configured to coordinate with the shape of one of said open-topped containers such that said area overlaps the outside top of said container.

## Patentansprüche

1. Verfahren für das Aufschrumpfen einer wärmeschrumpfbaren Kunststoffolie (102) auf den Oberteil eines oben offenen Behälters (12) gegen eine sich am oberen Außenrand desselben befindliche Dichtfläche (15) zu seiner Abdichtung, bestehend aus der Anordnung der besagten Kunststoffolie auf dessen Oberteil und von dort nach unten weisend und dem anschließenden Aufschrumpfen der besagten Folie auf die besagte Dichtfläche unter Verwendung von Strahlung mit einer ausgeprägten Infrarotkomponente, dadurch gekennzeichnet, daß das besagte, auf der besagten Dichtfläche aufliegende Stück Kunststoffolie dunkel ausgeführt ist, so daß es Infrarotenergie stärker absorbiert als der Flächenteil der Folie, der sich über den oberen Teil des Behälters erstreckt, so daß die besagte, an die Dichtfläche angrenzende Folie auf die Dichtfläche aufschrumpft, ehe eine wesentliche Schrumpfung der Folie auftritt, die sich über den oberen Teil des Behälters erstreckt.

2. Verfahren gemäß Anspruch 1, bei dem die besagte Anordnung des besagten Stücks Kunststoffolie auf dem Behälteroberteil aufliegend und nach unten weisend dadurch erreicht wird, daß der besagte Behälter nach oben gegen eine Bahn der besagten Folie gedrückt wird und diese Folie nach oben gegen eine Vorrichtung (94) zum Schneiden drückt, wobei das besagte Stück aus der besagten Bahn ausgeschnitten wird und das weitere Heben des besagten Behälters die besagte Dichtfläche in die Lage für die Bestrahlung mit einem hierzu bestimmten Gerät bringt.

3. Verfahren gemäß Anspruch 1, gekennzeichnet durch einen weiteren Verfahrensschritt mit Bestrahlung eines Teils der besagten, sich über den Oberteil des besagten Behälters erstreckenden Folie nach dem besagten Schrumpfungsschritt, um danach den besagten Teil, der sich über den oben offenen Bereich erstreckt, ausreichend zu schrumpfen, um die Folie straff zu spannen.

4. Gerät für das Versiegeln eines oben offenen Behälters (12) durch Aufschrumpfen eines Stücks (12) einer wärmeschrumpfenden Kunststoffolie (26) auf einen Dichtbereich (15) um den oberen Randbereich des Behälters herum, bestehend aus:
Einer Rolle (22) der besagten, wärmeschrumpfbaren Kunststoffolie;
Einem Gehäuse (10) mit Mitteln (24, 28, 30, 32) für die Plazierung einer Bahn der besagten Folie auf der besagten Rolle über der Einfüllöffnung (14) im Oberteil eines Behälters;
Mitteln (94) für das Schneiden der besagten Folie auf solche Art und Weise, daß die besagte Folie beim Schneiden ausreichen groß bemessen ist, um die besagte Dichtfläche zu überlappen, wobei besagte Mittel für das Schneiden betätigt werden können, indem der besagte Behälter nach oben gegen die besagte Folie gedrückt wird, ehe er zur Bestrahlung der besagten Dichtfläche weiter nach oben gedrückt wird; und
Mitteln (68) in einem im wesentlichen lotrechten Abstand von der besagten Folienbahn zur Bestrahlung der besagten Dichtfläche mit Strahlung mit einer ausgeprägten Infrarotkomponente, um den besagten Film auf die besagte Dichtfläche aufzuschrumpfen, wenn der besagte Behälter aus der Ebene der besagten Folie nach oben gedrückt wird, um die besagte Folie in einer Position gegenüber besagtem Mittel für die Bestrahlung zu plazieren, dadurch gekennzeichnet, daß die besagte Kunststoffolie (26) dunklere Bereiche aufweist, die Infrarotenergie wesentlich stärker absorbieren als ihre anderen, mit der besagten Dichtfläche fluchtenden Bereiche, und des weiteren dadurch gekennzeichnet, daß die besagten Mittel für das Plazieren der Folienbahn so ausgebildet sind, daß die besagten dunkleren Bereiche über der besagten Dichtfläche zu liegen kommen.

5. Gerät gemäß Anspruch 4, dadurch weiter gekennzeichnet, daß besagte Mittel für das Plazieren der Folie Indexiermittel (34) für die Fortschaltung der besagten Folie nach dem Versiegeln des Behälters aufweisen, sowie Mittel zum Sensieren von Indexmarken auf der besagten Folie, um genaue Plazierung der besagten dunkleren Bereiche relativ zu dem besagten Behälter zu gewährleisten.

6. Gerät gemäß Anspruch 4, weiter gekennzeichnet durch eine zweite Bestrahlungsquelle (70), die so angeordnet ist, daß der Teil der besagten Folie bestrahlt wird, der sich über den besagten Behälter erstreckt, damit die besagte Folie nach dem Dichten so weit schrumpft, daß sie straff gespannt wird.

7. Wärmeschrumpfbare Folie in Form einer Rolle zur Verwendung in einem Gerät für das Versiegeln oben offener Behälter mit der besagten Folie durch Bestrahlung derselben mit Strahlungsenergie, um eine Wärmeschrumpfung herbeizuführen, wobei die besagte Folie bedruckt ist, um Bereiche zu erhalten, die Energie stärker absorbieren als andere Bereiche der besagten Folie und wobei eine große Anzahl solcher Flächen sequentiell in gleichen Abständen voneinander angeordnet sind und jeder besagte Bereich so konfiguriert ist, daß die Anordnung zu der Form eines der besagten, oben offenen Behälter paßt, so daß die besagte Fläche den äußeren Oberteil des besagten Behälters überlappt.

## Revendications

1. Un procédé pour rétracter un morceau de film plastique thermorétractable (101) sur un conteneur (12) ouvert par le haut transversalement à la partie supérieure de ce dernier et contre une zone de scellement (15) attenant au bord supérieur dudit conteneur à l'extérieur de ce dernier pour réaliser un scellement, ce procédé comprenant les étapes suivantes ; en premier lieu positionnement dudit morceau de film plastique, s'étendant dans le sens transversal de ladite partie supérieure en s'éloignant de cette dernière vers le bas, puis rétraction dudit morceau par application contre ledit conteneur à la dite zone de scellement en exposant ladite zone de scellement à un rayonnement essentiellement composé de lumière infrarouge, caractérisé en ce que la zone dudit morceau de film plastique attenant à ladite zone de scellement est assombrie de manière à absorber l'énergie infrarouge sensiblement plus que la zone du morceau s'étendant transversalement à la partie supérieure du conteneur, de sorte que ledit film adjacent à ladite zone de scellement se rétracte sur ladite zone de scellement avant la rétraction principale du fil plastique qui s'étend transversalement à la partie supérieure du conteneur.

2. Un procédé tel que cité à la revendication 1, dans lequel ledit positionnement dudit morceau de film plastique s'étendant transversalement à ladite partie supérieure ouverte en s'éloignant de celle-ci vers le bas, est effectué en soulevant ledit conteneur vers le haut contre une feuille dudit film plastique pour pousser ledit film vers le haut contre des moyens de coupe (94) pour découper ledit morceau dudit film et procédé dans lequel la poursuite du soulèvement dudit conteneur amène ladite zone de scellement en position pour être exposée à des moyens de rayonnement (68).

3. Un procédé tel que cité à la revendication 1, caractérisé par l'étape supplémentaire d'irradier la portion dudit fil s'étendant transversalement à ladite partie supérieure dudit conteneur, après ladite étape de rétraction afin de rétracter ensuite ladite portion dudit fil s'étendant transversalement à ladite partie supérieure afin de tendre le film.

4. Appareil à sceller un conteneur (12) ouvert par en haut en rétractant un morceau (102) de film plastique thermorétractable (26) sur une zone de scellement (15) autour du bord supérieur dudit conteneur comprenant :
un rouleau (22) dudit film plastique thermorétractable,
un logement (10) contenant des moyens (24, 28, 30, 32) pour le positionnement d'une bande dudit film dudit rouleau transversalement à la partie supérieure d'une ouverture d'introduction (14) du conteneur,
des moyens (94) pour couper ledit film plastique de sorte que ledit film, une fois coupé, soit suffisamment large pour recouvrir ladite zone de scellement, lesdits moyens de coupe étant actionnés en poussant le conteneur vers le haut contre ledit film avant d'être poussé davantage vers le haut pour l'irradiation de ladite zone de scellement et
des moyens (68) sensiblement au-dessus du niveau de ladite bande de film pour l'irradiation de ladite zone de scellement moyens dont le rayonnement a essentiellement une composante infrarouge de manière à rétracter ledit fil sur ladite zone de scellement quand ledit conteneur est poussé vers le haut en n'étant plus à la hauteur dudit du film pour positionner ladite zone de scellement en face desdits moyens de rayonnement, caractérisé par ledit film plastique (28) ayant des zones assombries de manière à absorber sensiblement davantage l'énergie infrarouge que les autres zones en général alignées avec ladite zone de scellement et caractérisé en outre par lesdits moyens de positionnement de la bande de film pouvant être adaptés pour aligner lesdites zones assombries au-dessus de la zone de scellement.

5. Appareil, tel que cité à la revendication 4, caractérisé en outre par lesdits moyens de positionnement de la bande de film comportant des moyens de mouvement intermittent (34) pour faire avancer ledit film après avoir scellé un conteneur et des moyens de détection pour détecter les repères sur ledit film afin d'assurer un positionnement correct desdites zones assombries par rapport audit conteneur.

6. Appareil, tel que cité à la revendication 4, caractérisé en outre par une seconde source de rayonnement (70) prévue pour irradier la partie dudit film s'étendant transversalement audit conteneur de sorte qu'après le scellement, ledit film puisse être amené à se rétracter pour être tendu.

7. Film rétractable en rouleau pour l'emploi dans un appareil de scellement de conteneurs ouverts par le haut au moyen dudit film par irradiation de ce dernier avecl'énergie radiante afin de produire une rétraction thermique, ledit film étant imprimé pour définir des zones qui absorbent l'énergie plus que d'autres zones dudit film, un grand nombre desdites zones étant disposées sur ledit rouleau à intervalles réguliers et à égale distance les unes des autres, chaque dite zone étant agencée de manière à correspondre à la forme de l'un desdits conteneurs ouverts par le haut de manière que ces dites zones recouvrent la partie supérieure extérieure dudit conteneur.
